# EUROPÄISCHE PATENTSCHRIFT

(11) **EP 4 052 938 B1**
(45) Veröffentlichungstag und Bekanntmachung des Hinweises auf die Patenterteilung: **10.04.2024**
(21) Anmeldenummer: 22156224.2
(22) Anmeldetag: 10.02.2022
(51) Int. Cl.: B60H 1/00, B60H 1/32

(54) **HEIZUNGS- UND KLIMAANLAGE MIT VERSCHIEDENEN TEMPERATURNIVEAUS FÜR EIN FAHRZEUG UND VERFAHREN DAZU**
HEATING AND AIR CONDITIONING SYSTEM WITH DIFFERENT TEMPERATURE LEVELS FOR A VEHICLE AND METHOD THEREFOR
INSTALLATION DE CHAUFFAGE ET DE CLIMATISATION À DES DIFFÉRENTS NIVEAUX DE TEMPÉRATURE POUR UN VÉHICULE ET PROCÉDÉ ASSOCIÉ

(30) Priorität: 02.03.2021 DE 102021104972
(43) Veröffentlichungstag der Anmeldung: 07.09.2022
(73) Patentinhaber: Konvekta Aktiengesellschaft, 34613 Schwalmstadt-Ziegenhain (DE)
(72) Erfinder: Sonnekalb, Michael, 34613 Schwalmstadt (DE); Fink, Sebastian, 34628 Willingshausen (DE)
(74) Vertreter: Lindinger, Bernhard

(56) Entgegenhaltungen:
- EP-A1- 3 444 135
- DE-A1-102010 051 976
- DE-A1-102011 105 366
- US-A1- 2017 297 414
- US-A1- 2019 315 194

## Beschreibung

### Gebiet der Technik:

Die Erfindung betrifft eine Heizungs- und Klimaanlage für ein Fahrzeug gemäß dem Oberbegriff des Anspruchs 1. Eine derartige Klimaanlage umfasst einen ersten Heizkreis zum Heizen und einen Kühlkreis sowie einen Kältemittelkreis, der einen Verdichter, ein Expansionsorgan, einen als Verdampfer betreibbaren Außenwärmetauscher, einen hochdruckseitigen ersten Wärmetauscher und einen zumindest für den Klimabetrieb zugeschalteten oder zuschaltbaren niederdruckseitigen zweiten Wärmetauscher wenigstens umfasst, wobei der erste Wärmetauscher auch an den ersten Heizkreis angeschlossen ist und der zweite Wärmetauscher auch an den Kühlkreis angeschlossen ist.

Die Erfindung betrifft außerdem ein Verfahren zum Steuern einer derartigen Heizungs- und Klimaanlage sowie ein Fahrzeug mit einer solchen Heizungs- und Klimaanlage.

Insbesondere Elektro- oder Hybridfahrzeuge weisen derartige Anlagen vor allem zum Kühlen oder Heizen von Luft für einen Fahrzeuginnenraum auf. Oft erfolgt mit der Anlage auch die Kühlung des elektrischen Energiespeichers des Elektro- oder Hybridfahrzeugs.

Die Komponenten des Kältemittelkreises sind mit Kältemittelleitungen zum Strömen des Kältemittels im Kreislauf verbunden. Im Kompressor wird das Kältemittel durch Kompression erwärmt und auf einen hohen Druck gebracht und im Expansionsorgan wieder entspannt, wobei es sich abkühlt.

### Stand der Technik:

Bekannt sind Kühlanlagen für Fahrzeuge, die sogar drei verschiedene Temperaturniveaus bereitstellen können. So offenbart EP3023609 A1 eine Kühlanlage für ein Fahrzeug mit einem Hochtemperatur-Kühlmittelkreis, einem Mitteltemperatur-Kühlmittelkreis und einem Niedrigtemperatur-Kühlmittelkreis zum Kühlen von Komponenten eines Fahrzeugs auf drei verschiedenen Temperaturniveaus. Jedoch erfolgt dabei nachteilig die Kühlung der Kühlflüssigkeit in allen drei Kreise nur durch Luft. Ferner ist bei dem dortigen Kühlsystem kein Heizen vorgesehen. WO2018/009122 A1 offenbart eine Kühlanlage für ein Hybridfahrzeug mit drei Kühlmittelkreisläufen, die auf drei verschiedenen Temperaturniveaus betreibbar sind, wobei jedoch der Hochtemperatur-Kühlmittelkreis nur eine Luftkühlung aufweist, um mit der damit abgekühlten Kühlflüssigkeit den Verbrennungsmotor zu kühlen. Ein Heizen ist mit der dortigen Kühlanlage nicht vorgesehen.

Die in US2006/0032623 A1 offenbarte Anlage ist zwar sowohl zum Kühlen als auch zum Heizen von Luft einsetzbar, aber sie weist neben dem Kältemittelkreis lediglich einen Heizkreis und einen umschaltbaren Kühl- oder Heizkreis auf, sodass nicht die Möglichkeit besteht, damit drei Temperaturniveaus gleichzeitig zu betreiben. Auch die in Figur 6 von US2012/0031140 A1 offenbarte Heizungs- und Klimaanlage mit einem Kältemittelkreis und drei über Wärmetauscher daran angeschlossenen Heizbeziehungsweise Kühlflüssigkeitskreisen lässt sich lediglich mit maximal zwei Temperaturniveaus gleichzeitig betreiben. Der erste Hochtemperatur-Kühlflüssigkeitskreis dient dort lediglich der indirekten Kühlung des Kältemittels mit Außenluft.

Hingegen lässt sich die in DE102018212693 A1 offenbarte Anlage auf drei verschiedenen Temperaturniveaus betreiben, wobei der Kältemittelkreis auf seiner Hochdruckseite jedoch zum Heizen nur einen Kondensator/Gaskühler für den Wärmetausch mit Heizflüssigkeit eines Heizkreises mit einen Temperaturniveau umfasst. Bei dem dortigen Hochtemperatur-Kühlmittelkreis erfolgt die Erwärmung hauptsächlich durch die Abwärme eines Verbrennungsmotors, sodass das hohe Temperaturniveau nicht leicht konstant einzustellen ist und dafür Abwärme eines Motors benötigt wird.

Die in DE102010051976 A1 offenbarte Heizungs- und Klimaanlage lässt sich auch auf drei verschiedenen Temperaturniveaus betreiben, wobei jedoch im Heizungsbetrieb die Wärme zum Verdampfen nur intern aus der Anlage oder dem Fahrzeug beziehbar ist. Die in US2008/0041071 A1 gezeigte Heizungs- und Klimaanlage lässt sich zwar auf drei Temperaturniveaus betreiben, aber enthält keinen Kühlkreis, sodass der Kältemittelkreis einen Verdampfer in der Luftbehandlungseinheit aufweist, was einer kompakten Ausführung des Kältekreises entgegensteht.

Die in US2017/0297414 A1 offenbarte Anlage für ein Fahrzeug lässt sich auf drei verschiedenen Temperaturniveaus betreiben, aber der Kältemittelkreis enthält keinen Außenwärmetauscher.

In DE102011105366 A1 ist eine Kühlanordnung für einen elektrischen Energiespeicher mit einem Kühlkreis für den elektrischen Energiespeicher, der über einen Latentwärmespeicher mit einem Klimakreislauf des Fahrzeugs thermisch gekoppelt ist, offenbart.

Die in DE102018129393 A1 und DE102017118425 A1 offenbarten Kreislaufsysteme für ein Fahrzeug verfügen über nur einen an den Kältemittelkreis angeschlossenen Heizkreis und über einen an den Kältemittelkreis angeschlossenen Kühlkreis.

Der im Anspruch 1 angegebenen Erfindung liegt also das Problem zugrunde, dass bei bisher bekannten Heizungs- und Klimaanlagen für ein Fahrzeug das Heizen und Kühlen auf verschiedenen Temperaturniveaus mit Hilfe eines Kältemittelkreises der Anlage unzureichend ist. Es ist also eine insbesondere hinsichtlich des Heizens und Kühlens auf verschiedenen Temperaturniveaus verbesserte Heizungs- und Klimaanlage für ein Fahrzeug bereitzustellen.

Der im Anspruch 15 angegebenen Erfindung liegt das entsprechende Problem für ein Fahrzeug mit einer derartigen Heizungs- und Klimaanlage zugrunde. Ferner liegt der im Anspruch 17 angegebenen Erfindung das entsprechende Problem für ein Verfahren zum Steuern einer derartigen Heizungs- und Klimaanlage bei einem Fahrzeug zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Heizungs- und Klimaanlage mit einem zumindest eine Pumpe umfassenden ersten Heizkreis zum Heizen und mit einem zumindest eine Pumpe umfassenden Kühlkreis sowie mit einem Kältemittelkreis, der einen Verdichter, ein Expansionsorgan, einen im Wärmepumpenbetrieb als Verdampfer betreibbaren Außenwärmetauscher, einen hochdruckseitigen ersten Wärmetauscher und einen zumindest für den Klimabetrieb zugeschalteten oder zuschaltbaren niederdruckseitigen zweiten Wärmetauscher wenigstens umfasst, wobei der erste Wärmetauscher auch an den ersten Heizkreis angeschlossen ist und der zweite Wärmetauscher auch an den Kühlkreis angeschlossen ist, und im ersten Wärmetauscher Kältemittel des Kältemittelkreises mit Heizflüssigkeit des ersten Heizkreises durch Wärmetauschverbindung direkt und/oder über ein gegebenenfalls erstes Latentwärmespeichermedium thermisch gekoppelt oder koppelbar ist und im zweiten Wärmetauscher Kältemittel des Kältemittelkreises und Kühlflüssigkeit des Kühlkreises durch Wärmetauschverbindung direkt und/oder über ein gegebenenfalls zweites Latentwärmespeichermedium thermisch gekoppelt oder koppelbar ist, wobei die Heizungs- und Klimaanlage für ein Fahrzeug ausgebildet ist, wobei die Heizungs- und Klimaanlage einen zumindest eine Pumpe umfassenden zweiten Heizkreis zum Heizen umfasst, der Kältemittelkreis einen zum ersten Wärmetauscher in vorgesehener Kältemittelströmungsrichtung stromabwärts angeordneten hochdruckseitigen dritten Wärmetauscher umfasst, und der dritte Wärmetauscher auch an den zweiten Heizkreis angeschlossen ist, wobei im dritten Wärmetauscher Kältemittel des Kältemittelkreises mit Heizflüssigkeit des zweiten Heizkreises durch Wärmetauschverbindung direkt und/oder über ein gegebenenfalls drittes Latentwärmespeichermedium thermisch gekoppelt oder koppelbar ist, und der Außenwärmetauscher des Kältemittelkreises in Kältemittelströmungsrichtung stromabwärts des dritten Wärmetauschers angeordnet ist, wird das Problem gelöst.

Diese Heizungs- und Klimaanlage hat den Vorteil, dass zum Heizen der zweite Heizkreis auf einem niedrigeren Temperaturniveau betrieben werden kann als der erste Heizkreis. Ferner kann der Kühlkreis auf einem dritten noch niedrigeren Temperaturniveau betrieben werden. Das Kältemittel des Kältemittelkreises dient vorteilhaft dafür als Wärme- und Kältequelle. Als extra Wärmequelle ist Abwärme eines Antriebsmotors des Fahrzeugs nicht notwendig. Die jeweiligen Temperaturniveaus lassen sich mit der Heizungs- und Klimaanlage konstant zum Heizen und Kühlen einstellen. Im Wärmepumpenbetrieb also Heizungsbetrieb ist vorteilhaft ein Außenwärmetauscher des Kältemittelkreises als Verdampfer betreibbar. Dadurch kann die zum Verdampfen benötigte Wärme direkt aus der Außenluft bezogen werden. Der Betrieb der Anlage ist insbesondere wegen des nur einen Kältemittelkreises unkompliziert und relativ kostengünstig. Die Wärmetauscher des Kältemittelkreises müssen nicht direkt im Luftbehandlungsbereich für den Fahrzeuginnenraum liegen, was eine kompaktere Ausführung des Kältemittelkreises erlaubt.

Ein Außenwärmetauscher ist ein Wärmetauscher, zum Wärmetausch mit Außenluft.

Ein Latentwärmespeichermedium ist ein Wärmespeichermedium, in dem latente Wärme speicherbar ist. Dieses schließt aber nicht aus, dass sensible Wärme darin speicherbar ist. Oft bestehen Latentwärmespeichermedien aus Phasenwechselmaterial.

In den Unteransprüchen sind vorteilhafte Ausgestaltungen, Weiterbildungen und Verbesserungen des jeweiligen Gegenstandes der Erfindung angegeben.

Vorzugsweise sind der erste Wärmetauscher im Kältemittelkreis als Enthitzer für ein erstes Temperaturniveau und der dritte Wärmetauscher im Kältemittelkreis als Nachkühler für ein niedrigeres zweites Temperaturniveau ausgebildet. Damit wird ein gleichzeitiges Heizen mit zwei Heizkreisen auf unterschiedlichen Temperaturniveaus über Wärmetausch von der Hochdruckseite eines Kältemittelkreises auf einfache Weise ermöglicht.

Nach einer vorteilhaften Ausgestaltung sind zumindest der erste Wärmetauscher und
der dritte Wärmetauscher auch als Latentwärmespeicher mit jeweiligem Latentwärmespeichermedium ausgebildet und das erste Latentwärmespeichermedium ist durch Wärmetauschverbindung einerseits mit Kältemittel des Kältemittelkreises und andererseits mit Heizflüssigkeit des ersten Heizkreises thermisch gekoppelt oder koppelbar und das dritte Latentwärmespeichermedium ist durch Wärmetauschverbindung einerseits mit Kältemittel des Kältemittelkreises und andererseits mit Heizflüssigkeit des zweiten Heizkreises thermisch gekoppelt oder koppelbar und weist eine niedrigere Schmelztemperatur als das erste Latentwärmespeichermedium auf. Dadurch kann Wärme im jeweiligen ersten
und dritten Wärmetauscher effektiv gespeichert werden. Diese kann dann beispielsweise an die jeweilige Heizflüssigkeit des jeweiligen ersten oder zweiten Heizkreises abgegeben werden. Damit ist das Wärmemanagement flexibler. Auch ein Teillastbetrieb der Anlage ist dadurch verbessert.

Zum Beispiel lässt sich mit der gespeicherten Wärme oder Kälte bei ausgeschalteten Kältemittelkreis weiterhin Heizen oder Kühlen.

Von Vorteil ist auch eine Ausführung der vorliegenden erfindungsgemäßen Heizungs- und Klimaanlage, bei der der erste Wärmetauscher und/oder der zweite Wärmetauscher und/oder der dritte Wärmetauscher als Röhren-Lamellen-Wärmetauscher ausgebildet ist/sind. In einen derartigen Wärmetauscher lässt sich ein Latentwärmespeichermedium wie beispielsweise Xylit oder Paraffin gut einbringen, sodass eine indirekte thermische Koppelung über das jeweilige Latentwärmespeichermedium zwischen Kältemittel des Kältemittelkreises und der Heiz- oder Kühlflüssigkeit des jeweiligen Heiz- oder Kühlkreises erreicht wird.

Gemäß einer weiteren vorteilhaften Ausgestaltung der vorliegenden erfindungsgemäßen Heizungs- und Klimaanlage ist/sind der erste Wärmetauscher und/oder der zweite Wärmetauscher und/oder der dritte Wärmetauscher als Plattenwärmetauscher ausgebildet. Bei derartigen Flüssigkeit-Kältemittel-Wärmetauschern ist eine direkte thermische Koppelung von Heiz- oder Kühlflüssigkeit mit dem Kältemittel des Kältemittelkreises durch die Platten als Wärmetauschverbindung besonders effektiv.

Vorzugsweise ist der Kältemittelkreis derart druckfest ausgebildet, dass er mit Kältemittel transkritisch betreibbar ist. Damit lässt sich hochdruckseitig im Kältemittelkreis ein gleitender Temperaturverlauf bei konstantem Druck realisieren. Insbesondere eignet sich dafür CO2 als kostengünstiges sowie ungefährliches Kältemittel des Kältemittelkreises, wobei für das Kältemittel die gesamte Hochdruckseite des Kältemittelkreises eine Druckfestigkeit von mindestens 90 bar aufweist.

Gemäß einer vorteilhaften Ausgestaltung ist die erfindungsgemäße Heizungs- und Klimaanlage derart ausgebildet, dass sie so betreibbar ist, dass im ersten Wärmetauscher das Kältemittel des Kältemittelkreises eine Höchsttemperatur von über 40°C und im dritten Wärmetauscher das Kältemittel eine Höchsttemperatur im Bereich von einschließlich 15°C bis einschließlich 40°C aufweist. So sind der erste und der zweite Heizkreis auf deutlich unterschiedlichen Temperaturniveaus betreibbar, wobei das Temperaturniveau des ersten Heizkreises für ein Heizen mit Konvektoren und das Temperaturniveau des zweiten Heizkreises für ein Heizen mit Luft-Flüssigkeits-Wärmetauschern im Bereich eines Fahrzeugdachs gut geeignet ist.

Vorzugsweise ist der Außenwärmetauscher der Heizungs- und Klimaanlage derart ausgebildet, dass er als Luft-Kältemittel-Wärmetauscher für den Klimabetrieb als Gaskühler betreibbar ist. Damit erfüllt der Außenwärmetauscher den Wärmetausch des Kältemittels mit der Außenluft sowohl im Klimabetrieb als auch im Wärmepumpenbetrieb der Heizungs- und Klimaanlage. Besonders von Vorteil ist dabei eine Ausführungsform, bei der der Außenwärmetauscher zwei getrennte Kältemittelleitungen zweier Kältemittelleitungsstränge aufweist, wobei in dem einen Kältemittelleitungsstrang das Expansionsorgan in vorgesehener Kältemittelströmungsrichtung stromaufwärts des Außenwärmetauschers und im anderen Kältemittelleitungsstrang ein zweites Expansionsorgan in vorgesehener Kältemittelströmungsrichtung stromabwärts des Außenwärmetauschers sowie weiter stromabwärts der zweite Wärmetauscher angeordnet sind und die beiden Kältemittelleitungsstränge mit Hilfe wenigstens eines in vorgesehener Kältemittelströmungsrichtung stromabwärts des dritten Wärmetauschers angeordneten Ventils in Parallelschaltung zueinander zumindest alternativ schaltbar sind. Dadurch ist im Außenwärmetauscher getrennt voneinander die eine Kältemittelleitung für den Verdampferbetrieb und die andere Kältemittelleitung für den Gaskühlerbetrieb des Außenwärmetauscher vorgesehen. Vorzugsweise ist der Außenwärmetauscher im Kältemittelkreis als Mischwärmetauscher gleichzeitig sowohl als Verdampfer als auch als Gaskühler betreibbar und das Größenverhältnis der Kältemittelströme durch die beiden Kältemittelleitungsstränge regelbar. Damit lässt sich die Heizungs- und Klimaanlage vorteilhaft im regelbaren Mischbetrieb zwischen reinem Wärmepumpenbetrieb und reinem Klimabetrieb betreiben. Das Regeln erfolgt dabei beispielsweise über ein regelbares Drei-Wege-Ventil gleich stromabwärts des dritten Wärmetauschers im Kältemittelkreis.

Nach einer vorteilhaften Weiterbildung der vorliegenden erfindungsgemäßen Heizungs- und Klimaanlage umfasst der erste Heizkreis auch mindestens einen Konvektor zum Positionieren im Bodenbereich eines Fahrzeuginnenraums und/oder auch mindestens einen Luft-Flüssigkeits-Wärmetauscher für das Heizen von Luft für den Fahrerplatzbereich. Damit ist ein Betreiben des Konvektors und/oder des Fahrerplatzwärmetauschers mit ausreichend heißer Heizflüssigkeit gewährleistet. Vorzugsweise umfasst der zweite Heizkreis auch wenigstens einen Luft-Flüssigkeits-Wärmetauscher zum Positionieren im Bereich eines Fahrzeugdachs für das Heizen von Luft für einen Fahrzeuginnenraum oder für einen Fahrzeuginnenraumbereich. Dadurch wird eine ausreichende Erwärmung dieser Luft mit nicht zu heißer Heizflüssigkeit erreicht.

Gemäß einer vorteilhaften Ausgestaltung umfasst der Kühlkreis auch wenigstens einen Luft-Flüssigkeits-Wärmetauscher für das Kühlen von Luft für einen Fahrzeuginnenraum oder für einen Fahrzeuginnenraumbereich. Damit lässt sich effektiv die Luft in einem Fahrzeuginnenraum kühlen.

Nach einer vorteilhaften Weiterbildung der vorliegenden erfindungsgemäßen Heizungs- und Klimaanlage umfasst sie eine Regelung für das Steuern der Heizungs- und Klimaanlage. Damit ist die Anlage automatisch steuerbar. Vorzugsweise ist die Regelung ausgebildet, das Schalten des Kältemittelkreises zwischen Klimabetrieb und Wärmepumpenbetrieb zu steuern und die Pumpen des ersten und zweiten Heizkreises sowie die Pumpe des Kühlkreises in der Pumpleistung zu steuern und/oder mit Hilfe von Messdaten von Temperatursensoren die jeweilige Temperatur der jeweiligen Heiz- und Kühlflüssigkeit zu steuern und/oder die Leistung des Verdichters zu steuern und/oder das/die Expansionsorgan/e zu steuern. Damit ist die Anlage besonders flexibel und gut automatisch steuerbar.

Gemäß einer vorteilhaften Ausführungsform sind der erste und dritte Wärmetauscher als Teile einer Wärmetauschereinheit ausgebildet, was als kompakte Bauweise Platz und Material einspart.

Schließlich können die Merkmale der Unteransprüche für die erfindungsgemäße Heizungs- und Klimaanlage im Wesentlichen frei miteinander und nicht durch die den Ansprüchen vorliegende Reihenfolge festgelegt kombiniert werden, sofern sie unabhängig voneinander sind und sich nicht gegenseitig ausschließen.

Das dem im Anspruch 15 angegebenen erfindungsgemäßen Fahrzeug zugrunde liegende Problem wird durch ein Fahrzeug, wie insbesondere ein Omnibus oder Schienenfahrzeug, mit einer erfindungsgemäßen Heizungs- und Klimaanlage gelöst. Hinsichtlich der weiteren Vorteile sowie vorteilhaften Ausführungen und Weiterbildungen gelten entsprechend die diesbezüglichen obigen Angaben zu der erfindungsgemäßen Heizungs- und Klimaanlage. Besonders von Vorteil ist ein Elektrofahrzeug oder ein Hybridfahrzeug mit der erfindungsgemäßen Heizungs- und Klimaanlage.

Das dem im Anspruch 17 angegebenen erfindungsgemäßen Verfahren zugrunde liegende Problem wird durch ein Verfahren zum Steuern einer erfindungsgemäßen Heizungs- und Klimaanlage bei einem Fahrzeug für das Heizen und/oder Kühlen von Luft für einen oder mehrere Fahrzeuginnenräume oder Fahrzeuginnenraumbereiche, wobei gleichzeitig zum Heizen der erste Heizkreis mit einem höheren Temperaturniveau als der zweite Heizkreis betrieben werden, gelöst. Dadurch wird vorteilhaft mittels des Kältemittelkreises über die Heizflüssigkeiten gleichzeitig auf zwei unterschiedlichen Temperaturniveaus geheizt, wobei zusätzlich auch noch ein Kühlen auf einem dritten Temperaturniveau möglich ist.

Hinsichtlich der weiteren Vorteile sowie vorteilhaften Ausführungen und Weiterbildungen gelten entsprechend die diesbezüglichen obigen Angaben zu der erfindungsgemäßen Heizungs- und Klimaanlage.

### Kurze Beschreibung der Zeichnungen:

Anhand der Zeichnungen werden Ausführungsbeispiele der Erfindung erläutert.

Es zeigen
Fig. 1 in Blockdarstellung ein Ausführungsbeispiel einer Heizungs- und Klimaanlage für ein Fahrzeug;
Fig. 2 in Blockdarstellung ein weiteres Ausführungsbeispiel einer Heizungs- und Klimaanlage für ein Fahrzeug;
Fig. 3 ein Ausführungsbeispiel eines auch als Latentwärmespeicher ausgebildeten ersten Wärmetauschers;
Fig. 4 ein Druck-Enthalpie-Diagramm mit dem Zyklus des Kältemittelkreises bei Betrieb einer Ausführungsform der erfindungsgemäßen Heizungs- und Klimaanlage;
Fig. 5 in Blockdarstellung ein Ausführungsbeispiel eines ersten Heizkreises einer erfindungsgemäßen Heizungs- und Klimaanlage;
Fig. 6 in Blockdarstellung ein Ausführungsbeispiel eines zweiten Heizkreises einer erfindungsgemäßen Heizungs- und Klimaanlage;
Fig. 7 ein Fahrzeug mit einer erfindungsgemäßen Heizungs- und Klimaanlage; und
Fig. 8 in Flussdiagrammdarstellung ein Ausführungsbeispiel eines Verfahrens zum Steuern einer erfindungsgemäßen Heizungs- und Klimaanlage.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

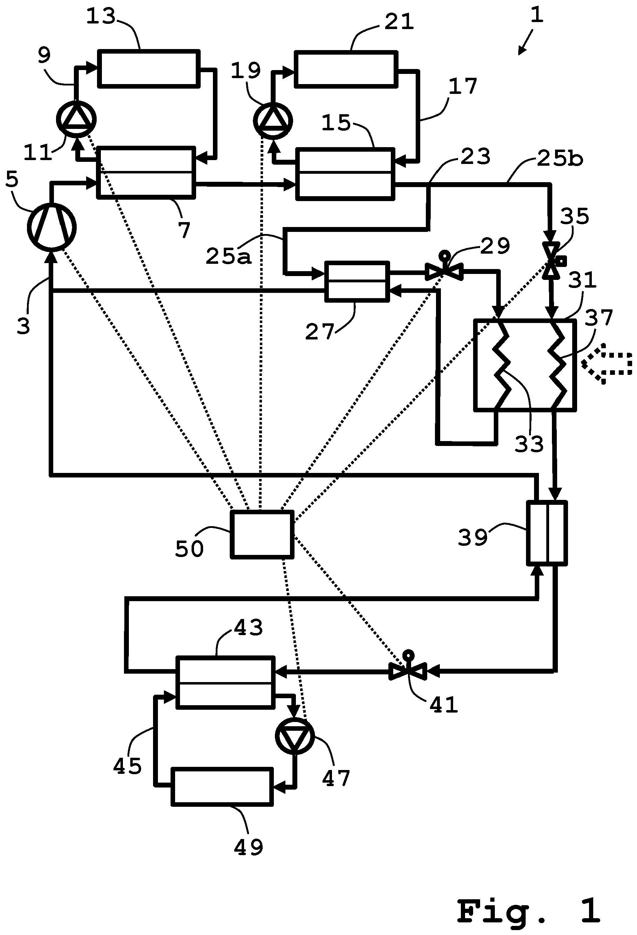

In Figur 1 ist in Blockdarstellung ein Ausführungsbeispiel einer Heizungs- und Klimaanlage 1 für ein Fahrzeug gezeigt. Der Kältemittelkreis 3 verfügt über einen Verdichter 5, der das Kältemittel komprimiert. Es ist in diesem Fall ein elektrisch antreibbarer optional in seiner Drehzahl regelbarer Verdichter 5. Denkbar ist auch ein vom Antriebsmotor des Fahrzeugs antreibbarer Verdichter 5. Das Kältemittel ist CO2, welches transkritisch im Kältemittelkreis 3 betrieben wird. Vom Ausgang des Verdichters 5 strömt das komprimierte Kältemittel mit hohem Druck und hoher Temperatur durch Kältemittelleitung in den ersten Wärmetauscher 7, der als Enthitzer im Kältemittelkreis 3 angeordnet ist. Er ist ein Flüssigkeit-Kältemittel-Wärmetauscher in Ausführung eines Plattenwärmetauschers. Denkbar ist auch eine andere geeignete Arte von Wärmetauscher. An den ersten Wärmetauscher 7 ist auch der erste Heizkreis 9 angeschlossen, dessen Heizflüssigkeit Wasser oder beispielsweise ein Wasser-Glykol-Gemisch ist. Im als Plattenwärmetauscher ausgebildeten ersten Wärmetauscher 7 ist das Kältemittel des Kältemittelkreises 3 über eine Wärmetauschverbindung direkt thermisch mit der Heizflüssigkeit des ersten Heizkreises 9 gekoppelt. Die beim Heizungsbetrieb der Heizungs- und Klimaanlage 1 dort mit über 40 °C Höchsttemperatur von heißen Kältemittel erhitzte Heizflüssigkeit wird im ersten Heizkreis 9 mit einer in diesem Fall als regelbaren Wasserpumpe ausgebildeten Pumpe 11 umgewälzt und zum Heizen von Luft eines Fahrzeuginnenraums zu einem Konvektor 13, der beispielsweise im Bodenbereich eines Fahrzeuginnenraums positionierbar beziehungsweise positioniert ist, transportiert.

Im Kältemittelkreis 3 in Strömungsrichtung des Kältemittels stromabwärts des ersten Wärmetauschers 7 ist durch Kältemittelleitung verbunden hochdruckseitig der dritte Wärmetauscher 15 angeordnet, der als Nachkühler ausgebildet ist. Er ist ein Flüssigkeit-Kältemittel-Wärmetauscher in der Ausführung eines Plattenwärmetauschers. Denkbar ist auch eine andere geeignete Art von Wärmetauscher. Der dritte Wärmetauscher 15 ist auch an den zweiten Heizkreis 17 angeschlossen, sodass mittels Wärmetauschverbindung in ihm eine direkte thermische Kopplung zwischen dem Kältemittel des Kältemittelkreises und der Heizflüssigkeit des zweiten Heizkreises 17 gegeben ist. Beim Heizungsbetrieb der Heizungs- und Klimaanlage 1 liegt die Höchsttemperatur des Kältemittels im dritten Wärmetauscher 15 im Bereich zwischen einschließlich 15 °C und einschließlich 40 °C, also unter der im ersten Wärmetauscher 7. Dadurch wird die Heizflüssigkeit des zweiten Heizkreises 17 nicht so heiß wie die Heizflüssigkeit des ersten Heizkreises 9, was ein gleichzeitiges Heizen mit der Heizungs- und Klimaanlage 1 auf zwei unterschiedlichen Temperaturniveaus ermöglicht. Die Heizflüssigkeit des zweiten Heizkreises 17 ist Wasser oder beispielsweise ein Wasser-Glykol-Gemisch und braucht nicht zwingend von derselben Art, wie die des ersten Heizkreises 9 zu sein. Durch den zweiten Heizkreis 17 wird das Heizmittel mit einer in diesem Fall als regelbaren Wasserpumpe ausgebildeten Pumpe 19 gepumpt und zum Heizen von Luft für einen eines Fahrzeuginnenraum zu einem Luft-Flüssigkeits-Wärmetauscher 21, der beispielsweise im Dachbereich eines Fahrzeuginnenraums positionierbar beziehungsweise positioniert ist, transportiert.

In einer denkbaren Variante können der erste Wärmetauscher 7 und der nachgeschaltete dritte Wärmetauscher 15 als Teile einer Wärmetauschereinheit ausgebildet sein.

Im Kältemittelkreis 3 befindet sich hochdruckseitig in Kältemittelströmungsrichtung gleich stromabwärts des dritten Wärmetauschers 15 ein Verzweigung 23 in zwei Kältemittelleitungsstränge 25a und 25b.

Der eine insbesondere für den Wärmepumpenbetrieb also Heizungsbetrieb der Heizungs- und Klimaanlage 1 vorgesehene Kältemittelleitungsstrang 25a führt durch einen optionalen ersten internen Wärmetauscher 27 zum ersten Expansionsorgan 29, das insbesondere für das Expandieren des Kältemittels eingesetzt wird. Das erste Expansionsorgan 29 ist in diesem Fall als regelbares Expansionsventil, welches auch als Absperrventil einsetzbar ist, ausgebildet. Denkbar sind auch im Kältemittelkreis 3 hintereinander angeordnete Absperrventil und thermostatisches Expansionsventil. In dem einen Kältemittelleitungsstrang 25a niederdruckseitig stromabwärts des ersten Expansionsorgans 29 befindet sich eine durch den Außenwärmetauscher 31 führende Kältemittelleitung 33, die als Verdampferbereich dient. Durch Expansion abgekühltes Kältemittel, das dort durch den Außenwärmetauscher 31 strömt, wird beim Wärmetausch mit Außenluft verdampft. Der Außenwärmetauscher 31 ist in diesem Fall ein Luft-Kältemittel-Wärmetauscher, der für den Wärmetausch von Außenluft mit Kältemittel des Kältemittelkreises 3 ausgebildet ist. Vom Außenwärmetauscher 31 führt der eine Kältemittelleitungsstrang 25a niederdruckseitig weiter durch den optionalen ersten internen Wärmetauscher 27 zum Eingang des Verdichters 5, wobei sich davor die beiden Kältemittelleitungsstränge 25a und 25b wieder vereinen. Der andere insbesondere für den Klimabetrieb der Heizungs- und Klimaanlage 1 vorgesehene Kältemittelleitungsstrang 25b führt in Kältemittelströmungsrichtung hingegen hochdruckseitig von der Verzweigung 23 zum schaltbaren Ventil 35 und weiter durch die zweite Kältemittelleitung 37 des Außenwärmetauschers 31, die als Gaskühlerbereich dient.

Dort hindurchströmendes Kältemittel wird durch Wärmetausch mit der Außenluft weiter abgekühlt. Der Außenwärmetauscher 31 ist also einerseits im einen Kältemittelleitungsstrang 25a als Verdampfer und andererseits im anderen Kältemittelleitungsstrang 25b als Gaskühler betreibbar. Die beiden Kältemittelleitungen 33 und 37 verlaufen im Außenwärmetauscher 31 getrennt voneinander.

Denkbar ist auch eine Variante mit zwei Außenwärmetauschern 31, wobei der eine als Verdampfer und der andere als Gaskühler betreibbar ist.

Vom Außenwärmetauscher 31 führt der andere für den Klimabetrieb vorgesehene Kältemittelleitungsstrang 25b weiter hochdruckseitig durch den optionalen zweiten internen Wärmetauscher 39 zum zweiten Expansionsorgan 41, das in diesem Fall als regelbares Expansionsventil ausgebildet ist. Denkbar ist auch eine andere übliche geeignete Arte eines Expansionsorgans 41. Niederdruckseitig im Kältemittelkreis 3 stromabwärts des zweiten Expansionsorgans 41 ist über Kältemittelleitung verbunden der zweite Wärmetauscher 43 angeordnet, in dem das dort hindurchströmende zuvor durch Expansion abgekühlte Kältemittel verdampft. Der zweite Wärmetauscher 43 ist in diesem Fall ein als Plattenwärmetauscher ausgebildeter Flüssigkeit-Kältemittel-Wärmetauscher, der auch an den Kühlkreis 45 angeschlossen ist. Im zweiten Wärmetauscher 43 ist mittels Wärmetauschverbindung Kältemittel des Kältemittelkreises 3 mit Kühlflüssigkeit des Kühlkreises 45 thermisch gekoppelt beziehungsweise koppelbar. Bei Klimabetrieb der Heizungs- und Klimaanlage 1 wird dort die Kühlflüssigkeit abgekühlt und mittels der im Kühlkreis 45 integrierten regelbaren Pumpe 47 zum ebenfalls im Kühlkreis 45 angeordneten Luft-Flüssigkeits-Wärmetauscher 49 transportiert, der zum Kühlen von Luft für einen Fahrzeuginnenraum beispielsweise im Dachbereich eines Fahrzeuginnenraums positionierbar oder bereits positioniert ist. Denkbar ist auch eine höhere Anzahl von Luft-Flüssigkeits-Wärmetauschern 49 zum Kühlen im Kühlkreis 45. Ferner sind Ausführungen denkbar, bei denen auch Wärmetauscher zum Kühlen von Fahrzeugkomponenten wie beispielsweise eines elektrische Energiespeichers im Kühlkreis 45 integriert werden. Somit sind über den ersten Heizkreis 9, den zweiten Heizkreis 17 und den Kühlkreis 45, die alle an den Kältemittelkreis 3 thermisch angebunden sind, drei unterschiedliche Temperaturniveaus mit der Heizungs- und Klimaanlage 1 zum Heizen und Kühlen möglich, wobei diese sogar gleichzeitig erreichbar sind.

Vom zweiten Wärmetauscher 43 führt der für den Klimabetrieb vorgesehene Kältemittelleitungsstrang 25b weiter durch die Niederdruckseite des optionalen zweiten internen Wärmetauscher 39 zurück zum Eingang des Verdichters 5.

Die Heizungs- und Klimaanlage 1 ist für ein Fahrzeug vorgesehen, wie beispielsweise einen Omnibus oder ein Schienenfahrzeug. Ein solches Fahrzeug kann beispielsweise ein Hybrid- oder ein reines Elektrofahrzeug sein.

Mit der Regelung 50 wird die Heizungs- und Klimaanlage 1 gesteuert. Sie umfasst in diesem Fall einen Prozessor für eine automatische Steuerung. Sie regelt die beiden Expansionsorgane 29 und 41, das Ventil 35, die Pumpen 11, 19 und 47 und die Leistung des Verdichters 5.

Sie ist dazu ausgebildet, Messsignale von in Figur 1 nicht gezeigten Temperatursensoren beispielsweise für die Außenlufttemperatur und für die Temperatur eines Fahrzeuginnenraums zu empfangen.

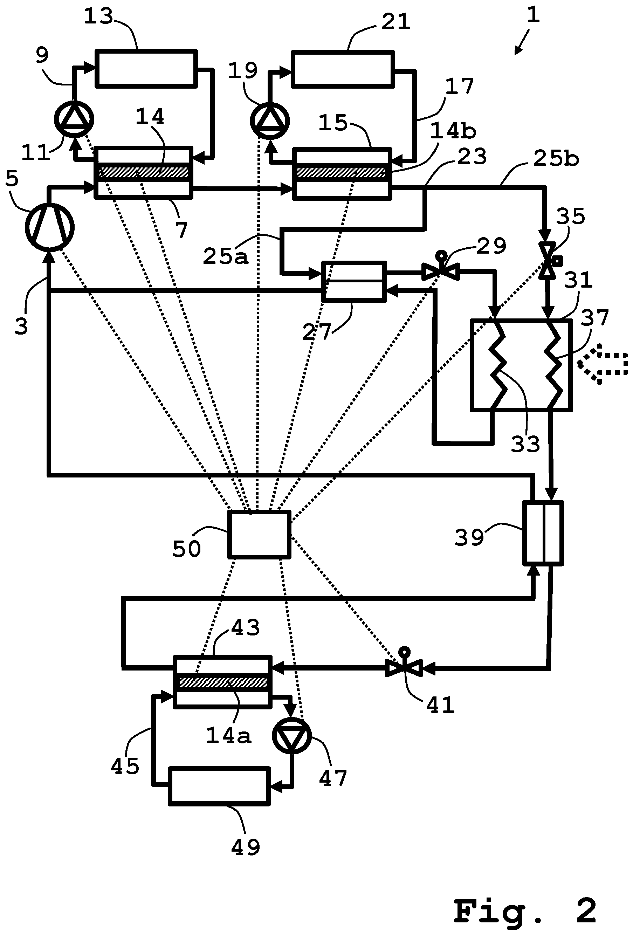

In Figur 2 ist in Blockdarstellung ein weiteres Ausführungsbeispiel einer Heizungs- und Klimaanlage 1 für ein Fahrzeug gezeigt. Die Heizungs- und Klimaanlage 1 entspricht der in Figur 1 gezeigten, wobei jedoch der erste, zweite und dritte Wärmetauscher 7, 43 und 15 jeweils auch als Latentwärmespeicher ausgebildet sind. Die Bezugszeichen und die damit gekennzeichneten Komponenten entsprechend denen von Figur 1. So sind an den einen Verdichter 5, zwei Expansionsorganen 29 und 41, ein schaltbares Ventil 35, einen sowohl als Verdampfer als auch als Gaskühler betreibbaren Außenwärmetauscher 31 und zwei interne Wärmetauscher 27 und 39 umfassenden Kältemittelkreis 3 über den ersten Wärmetauscher 7 der erste Heizkreis 9, über den dritten Wärmetauscher 15 der zweite Heizkreis 17 und über den zweiten Wärmetauscher 43 der Kühlkreis 45 thermisch gekoppelt.

Denkbar ist auch eine Variante mit zwei Außenwärmetauschern 31, wobei der eine als Verdampfer und der andere als Gaskühler betreibbar ist.

Der erste Wärmetauscher 7 enthält das erste Latentwärmespeichermedium 14, welches zwischen der Kältemittelleitung und der Heizflüssigkeitsleitung des ersten Wärmetauschers 7 angeordnet ist. Er ist als Röhren-Lamellen-Wärmetauscher ausgebildet. Denkbar ist auch eine andere Art von Wärmetauscher mit erstem Latentwärmespeichermedium 14, wie zum Beispiel ein Plattenwärmetauscher mit einer Schicht ersten Latentwärmespeichermedium 14 zwischen der das Kältemittel führenden Schicht und der die Heizflüssigkeit führenden Schicht. Das erste Latentwärmespeichermedium 14 ist in diesem Fall ein Paraffin als Phasen-Wechsel-Material mit einem Schmelzpunkt im Bereich von ungefähr 60 °C. Denkbar ist auch ein anderes für den Hochtemperaturbereich des ersten Wärmetauschers 7 geeignetes erstes Latentwärmespeichermedium 14, wie beispielsweise ein Zuckeralkohol wie insbesondere Xylit oder ein Salzhydrid mit ausreichend hoher Schmelztemperatur. Das Kältemittel des Kältemittelkreises 3 ist im ersten Wärmetauscher 7 über das erste Latentwärmespeichermedium 14 mit der Heizflüssigkeit des ersten Heizkreises 9 thermisch gekoppelt.

Der zweite Wärmetauscher 43 enthält ein zweites Latentwärmespeichermedium 14a, welches zwischen der Kältemittelleitung und der Kühlflüssigkeitsleitung des zweiten Wärmetauschers 43 angeordnet ist. Er ist als Röhren-Lamellen-Wärmetauscher ausgebildet. Denkbar ist auch eine andere Art von Wärmetauscher mit zweitem Latentwärmespeichermedium 14a. Das zweite Latentwärmespeichermedium 14a des zweiten Wärmetauschers 43 ist in diesem Fall Wasser, sodass der zweite Wärmetauscher 43 als Eisspeicher dienen kann. Denkbar ist auch ein anderes für den Niedertemperaturbereich des zweiten Wärmetauschers 43 geeignetes zweites Latentwärmespeichermedium 14a, wie zum Beispiel eine wässrige Salzlösung. Das Kältemittel des Kältemittelkreises 3 ist im zweiten Wärmetauscher 43 über das zweite Latentwärmespeichermedium 14a mit der Kühlflüssigkeit des Kühlkreises 17 thermisch gekoppelt.

Der dritte Wärmetauscher 15 enthält ein drittes Latentwärmespeichermedium 14b, welches zwischen der Kältemittelleitung und der Heizflüssigkeitsleitung des dritten Wärmetauschers 15 angeordnet ist. Er ist als Röhren-Lamellen-Wärmetauscher ausgebildet. Denkbar ist auch eine andere Art von Wärmetauscher mit drittem Latentwärmespeichermedium 14b. Das dritte Latentwärmespeichermedium 14b des dritten Wärmetauschers 15 ist in diesem Fall ein Paraffin mit geringerer Schmelztemperatur von ungefähr 40 °C als das erste Latentwärmespeichermedium 14 im ersten Wärmetauscher 7.

Denkbar ist auch ein anderes für den Mitteltemperaturbereich des dritten Wärmetauschers 15 geeignetes drittes Latentwärmespeichermedium 14b als Phasen-Wechsel-Material, wie ein Salzhydrid mit Schmelztemperatur von ungefähr 40 °C. Das Kältemittel des Kältemittelkreises 3 ist im dritten Wärmetauscher 15 über das dritte Latentwärmespeichermedium 14b mit der Heizflüssigkeit des zweiten Heizkreises 17 thermisch gekoppelt.

Mit der Regelung 50 wird die Heizungs- und Klimaanlage 1 gesteuert. Sie umfasst in diesem Fall einen Prozessor für eine automatische Steuerung. Sie regelt die beiden Expansionsorgane 29 und 41, das Ventil 35, die Pumpen 11, 19 und 47 und die Leistung des Verdichters 5.

Sie ist dazu ausgebildet, Messsignale bezüglich gespeicherter Wärme und Kälte in den Latentwärmespeichermedien 14, 14a und 14b der ersten, zweiten und dritten Wärmetauscher 7, 43 und 15 sowie Messsignale von in Figur 2 nicht gezeigten Temperatursensoren beispielsweise für die Außenlufttemperatur und für die Temperatur eines Fahrzeuginnenraums zu empfangen.

Als Varianten der erfindungsgemäßen Heizungs- und Klimaanlage 1 sind auch Mischformen der in Figur 1 und in Figur 2 gezeigten Ausführungsbeispiele denkbar, also dass nur einer oder zwei der ersten, zweiten und dritten Wärmetauscher 7, 43 und 15 auch als Latentwärmespeicher ausgebildet ist/sind, wie zum Beispiel nur der dritte Wärmetauscher 15 mit dem dritten Latentwärmespeichermedium 14b.

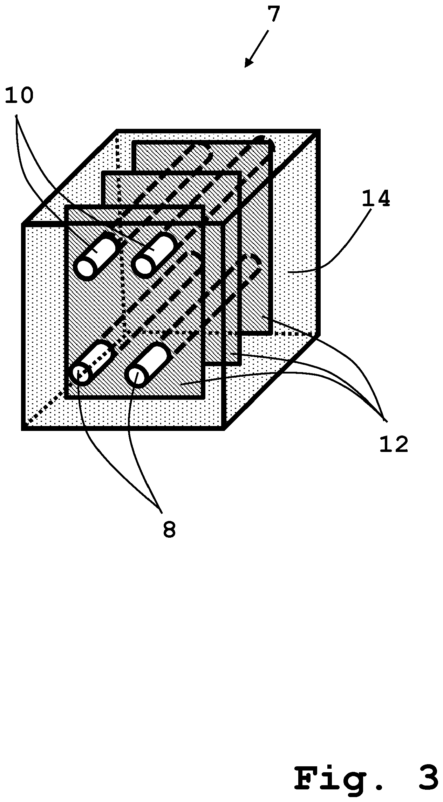

In Figur 3 ist ein Ausführungsbeispiel eines auch als Latentwärmespeicher ausgebildeten ersten Wärmetauschers 7 gezeigt. Dieser ist in diesem Fall ein Röhren-Lamellen-Wärmetauscher. Die für das Kältemittel des Kältemittelkreises vorgesehenen rohrartigen Kältemittelleitungen 8 führen im unteren Bereich des ersten Wärmetauschers 7 durch das erste Latentwärmespeichermedium 14, welches in diesem Fall Paraffin mit hoher Schmelztemperatur im Bereich von 60 °C bis 100 °C ist. Die für die Heizflüssigkeit des ersten Heizkreises vorgesehenen Röhren 10 verlaufen im oberen Bereich des ersten Wärmetauschers 7 parallel zu den Kältemittelleitungen 8 ebenfalls durch das erste Latentwärmespeichermedium 14. In der Ebene senkrecht zu den Längsachsen der Kältemittelleitungen 8 und der für die Heizflüssigkeit vorgesehenen Röhren 10 liegen mehrere parallel zueinander angeordnete plattenförmige Lamellen 12. Sie bestehen aus einem gut wärmeleitenden Material wie beispielsweise Aluminium oder Kupfer. Die Lamellen 12 stehen sowohl mit den Kältemittelleitungen 8 als auch mit den für die Heizflüssigkeit vorgesehenen Röhren 10 und außerdem mit dem ersten Latentwärmespeichermedium 14 in Wärmeleitverbindung.

Im Prinzip baugleich zum ersten Wärmetauscher 7 können auch der zweite Wärmetauscher und dritte Wärmetauscher aufgebaut sein, wobei das für den jeweils vorgesehenen Temperaturbereich passende Latentwärmespeichermedium eingesetzt wird, wie zum Beispiel im zweiten Wärmetauscher Wasser und im dritten Wärmetauscher ein Paraffin mit einer Schmelztemperatur von ungefähr 40 °C.

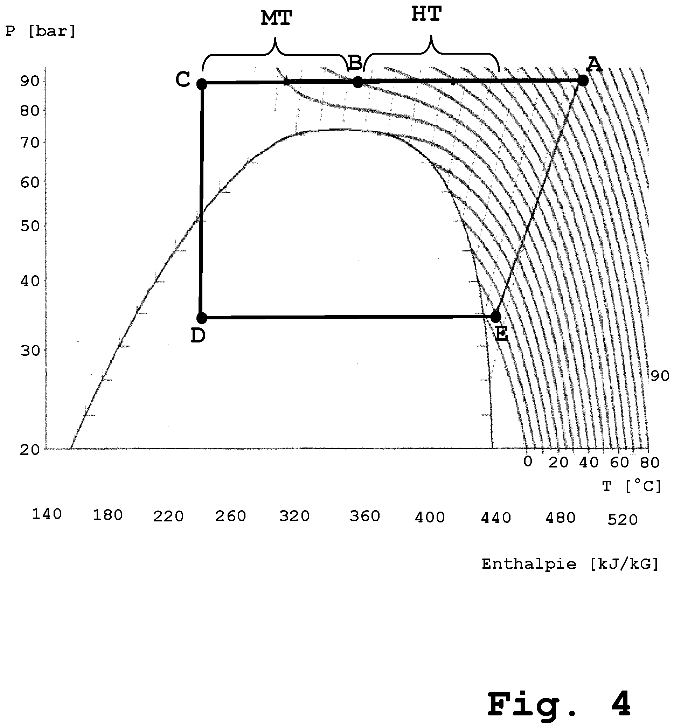

In Figur 4 ist ein Druck-Enthalpie-Diagramm mit dem Zyklus des Kältemittelkreises bei Betrieb einer Ausführungsform der erfindungsgemäßen Heizungs- und Klimaanlage dargestellt. Isotherme sind im rechten Teil des Diagramms eingezeichnet. Das Kältemittel ist CO2. Das CO2 wird vom Punkt E zum Punkt A durch Kompression im Verdichter auf hohen Druck und hohe Temperatur gebracht. Die Abkühlung des Kältemittels CO2 auf der Linie von Punkt A bis Punkt C erfolgt in diesem Fall bei gleitendem Temperaturverlauf von 90 °C bis hinunter auf 15 °C bei gleichbleibend hohem Druck von ca. 90 bar. Das Kältemittel CO2 hält sich dabei über dem kritischen Punkt. Den Hochdruck des Kältemittels CO2 über dem kritischen Punkt zu halten wird beispielsweise mittels entsprechender Füllstandverlagerung im Kältemittelkreis erreicht. Die Wärmeabgabe vom Kältemittel CO2 im ersten Wärmetauscher an die Heizflüssigkeit des ersten Heizkreises, der ein Hochtemperaturkreis ist, erfolgt auf der Linie zwischen Punkt A nach Punkt B im Temperaturbereich (HT) von ca. 65 °C bis hinunter auf ca. 43 °C. Die Heizflüssigkeit ist in diesem Fall Wasser. Die Wärmeabgabe ist begrenzt, denn die Heizflüssigkeit im ersten Heizkreis liegt bei Betrieb über 40 °C, sodass im ersten Wärmetauscher die Temperatur des Kältemittels CO2 nicht die 40 °C Isotherme unterschreiten kann. Die weitere Wärmeabgabe des Kältemittels erfolgt hochdruckseitig auf der Linie zwischen Punkt B nach Punkt C im dritten Wärmetauscher an die Heizflüssigkeit des zweiten Heizkreises im Mitteltemperaturbereich (MT) zwischen 40 °C und 15 °C. Bei im eingezeichneten Zyklus folgender Expansion im Expansionsorgan nimmt der Druck des Kältemittels bis zum Punkt D stark ab und dessen Temperatur sinkt adiabatisch deutlich ab. Auf der Niederdruckseite von Punkt D bis Punkt E wird im Diagramm eingezeichneten Zyklus insbesondere durch Verdampfung beispielsweise im Außenwärmetauscher die Enthalpie des Kältemittels erhöht bis schließlich im Kreislauf im Diagramm wieder der Punkt E erreicht wird. Der Punkt E entspricht im Kältemittelkreis dem Zustand des Kältemittels am Eingang des Verdichters.

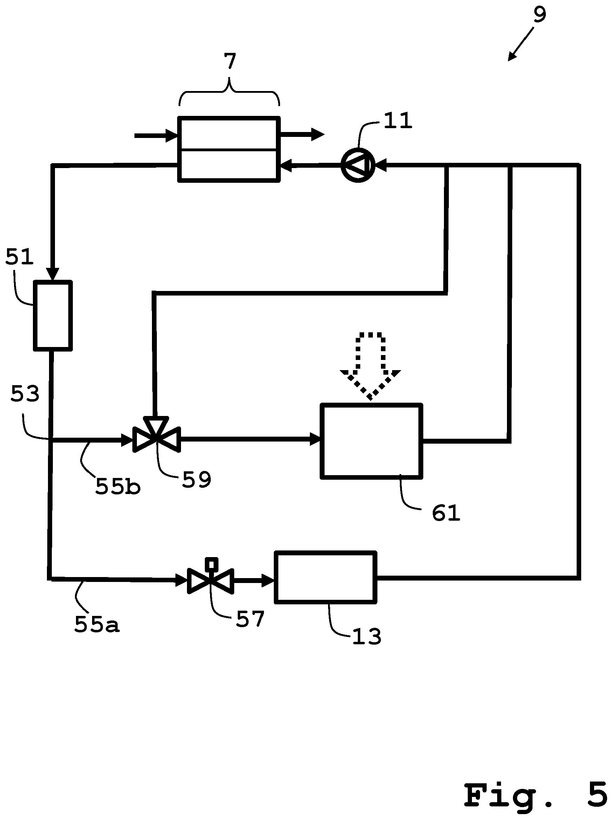

In Figur 5 ist in Blockdarstellung ein Ausführungsbeispiel eines ersten Heizkreises 9 einer erfindungsgemäßen Heizungs- und Klimaanlage gezeigt. In dem ersten Heizkreis 9 wird bei Heizungsbetrieb mit einer Pumpe 11 Heizflüssigkeit umgewälzt. Die Heizflüssigkeit ist Wasser oder ein Wasser-Glykol-Gemisch. Denkbar sind auch andere geeignete Heizflüssigkeiten. Der erste Heizkreis 9 ist ein Hochtemperaturkreis. Die Heizflüssigkeit wird auf einem Temperaturniveau von über 40 °C betrieben. Dafür ist der erste Heizkreis 9 an den ersten Wärmetauscher 7 angeschlossen. Dieser ist im Kältemittelkreis der Heizungs- und Klimaanlage als Enthitzer gleich nach dem Ausgang des Verdichters eingebunden, sodass dort für den Wärmetausch mit der Heizflüssigkeit das komprimierte Kältemittel, wie zum Beispiel CO2, besonders heiß ist. Der erste Wärmetauscher 7 ist in diesem Fall ein als Plattenwärmetauscher ausgebildeter Flüssigkeits-Kältemittel-Wärmetauscher. Denkbar ist auch eine Ausgestaltung als Wärmetauscher mit erstem Latentwärmespeichermedium, wie beispielsweise ein Zuckeralkohol. Bei einer solchen Variante ist der erste Wärmetauscher 7 auch gleichzeitig Latentwärmespeicher. Die Pumpe 11 ist eine regelbare elektrische Pumpe. Sie pumpt die Heizflüssigkeit im ersten Heizkreis 9 durch den ersten Wärmetauscher 7 und danach durch einen optional zuschaltbaren elektrischen Zuheizer 51, der, falls die Heizflüssigkeit zusätzlich zu erwärmen ist, eingeschaltet werden kann. In Flussrichtung der Heizflüssigkeit nach dem elektrischen Zuheizer 51 verzweigt sich die Flüssigkeitsleitung an der ersten Verzweigung 53, wobei der eine Flüssigkeitsleitungsstrang 55a zum regelbaren Ventil 57 für die Regulierung des Durchflusses durch den nachgeschaltete Konvektor 13 verläuft. Der Konvektor 13 ist dafür vorgesehen, im Bodenbereich eines Fahrzeuginnenraums positioniert zu werden. Vom Ausgang des Konvektors 13 führt dieser Flüssigkeitsleitungsstrang 55a zurück zum Eingang der Pumpe 11. Der andere Flüssigkeitsleitungsstrang 55b spaltet sich nach der Verzweigung 53 am Drei-Wege-Ventil 59 in zwei schaltbaren Leitungszweige auf, wobei der eine davon direkt zum Eingang der Pumpe 11 verläuft und der andere bevor er den Eingang der Pumpe 11 erreicht noch durch einen Fahrerplatzwärmetauscher 61 vorgesehen zum Beheizen des Bereichs eines Fahrerplatzes verläuft. In diesem Fall ist das Drei-Wege-Ventil 59 regelbar. Es ist derart ausgebildet, dass beide davon abzweigende Leitungszweige unabhängig voneinander für den Durchfluss von Heizflüssigkeit geöffnet und geschlossen werden können. Der erste Heizkreis 9 lässt sich durch das Regeln der Pumpe 11, des Ventils 57, des Zuheizers 51 und des Drei-Wege-Ventils 59 steuern.

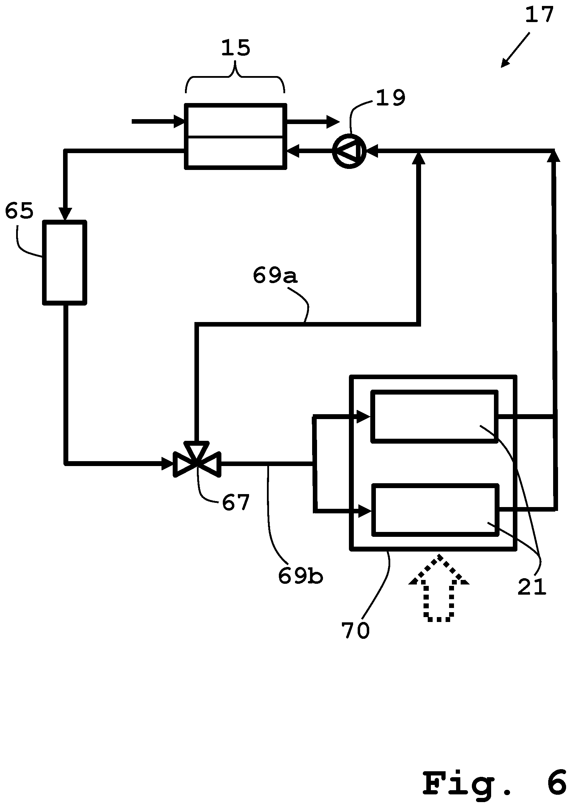

In Figur 6 ist in Blockdarstellung ein Ausführungsbeispiel eines zweiten Heizkreises 17 einer erfindungsgemäßen Heizungs- und Klimaanlage gezeigt. In dem zweiten Heizkreis 17 wird bei Heizungsbetrieb mit einer Pumpe 19 Heizflüssigkeit umgewälzt. Die Heizflüssigkeit ist Wasser oder ein Wasser-Glykol-Gemisch. Denkbar sind auch andere geeignete Heizflüssigkeiten. Der zweite Heizkreis 17 ist ein Mitteltemperaturkreis. Das Temperaturniveau ist niedriger als das des ersten Heizkreises. Die maximale Vorlauftemperatur der Heizflüssigkeit liegt bei 40 °C oder darunter. Die Rücklauftemperatur wird auf einem Temperaturniveau im Bereich von 15 °C bis einschließlich 30 °C betrieben. Dafür ist der zweite Heizkreis 17 an den dritten Wärmetauscher 15 angeschlossen. Dieser ist im Kältemittelkreis der Heizungs- und Klimaanlage als Nachkühler hinter dem ersten Wärmetauscher hochdruckseitig eingebunden, sodass dort für den Wärmetausch mit der Heizflüssigkeit das komprimierte Kältemittel, wie zum Beispiel CO2, nicht mehr ganz so heiß wie im ersten Wärmetauscher ist. Der dritte Wärmetauscher 15 ist in diesem Fall ein als Plattenwärmetauscher ausgebildeter Flüssigkeits-Kältemittel-Wärmetauscher. Denkbar ist auch eine Ausgestaltung als Wärmetauscher mit drittem Latentwärmespeichermedium, wie beispielsweise ein Paraffin. Bei einer solchen Variante ist der dritte Wärmetauscher 15 auch gleichzeitig Latentwärmespeicher. Die Pumpe 19 ist eine regelbare elektrische Pumpe. Sie pumpt die Heizflüssigkeit im zweiten Heizkreis 17 durch den dritten Wärmetauscher 15 und danach durch einen optional zuschaltbaren elektrischen Zuheizer 65, der, falls die Heizflüssigkeit zusätzlich zu erwärmen ist, eingeschaltet werden kann. In Flussrichtung der Heizflüssigkeit nach dem elektrischen Zuheizer 65 verzweigt sich die Flüssigkeitsleitung an dem regelbaren Drei-Wege-Ventil 67. Der eine Flüssigkeitsleitungsstrang 69a führt von dem einen Ausgang des Drei-Wege-Ventils 67 direkt zum Eingang der Pumpe 19 zurück. Der andere Flüssigkeitsleitungsstrang 69b verläuft zu zwei zum Heizen von Luft für den Fahrzeuginnenraum vorgesehenen Luft-Flüssigkeits-Wärmetauschern 21 für eine im Dach beziehungsweise auf dem Dach eines Fahrzeuginnenraums positionierbaren beziehungsweise positionierten Dacheinheit 70. Denkbar ist auch eine andere Anzahl von Luft-Flüssigkeits-Wärmetauschern 21, je nach Leistungsstärke und Platzverhältnissen der Heizungs- und Klimaanlage. Nach Durchlauf durch die Luft-Flüssigkeits-Wärmetauscher 21 verlaufen im zweiten Heizkreis 15 die Flüssigkeitsleitungen zurück zum Eingang der Pumpe 19. Der zweite Heizkreis 17 lässt sich durch das Regeln der Pumpe 19, des Zuheizers 65 und des Drei-Wege-Ventils 67 steuern.

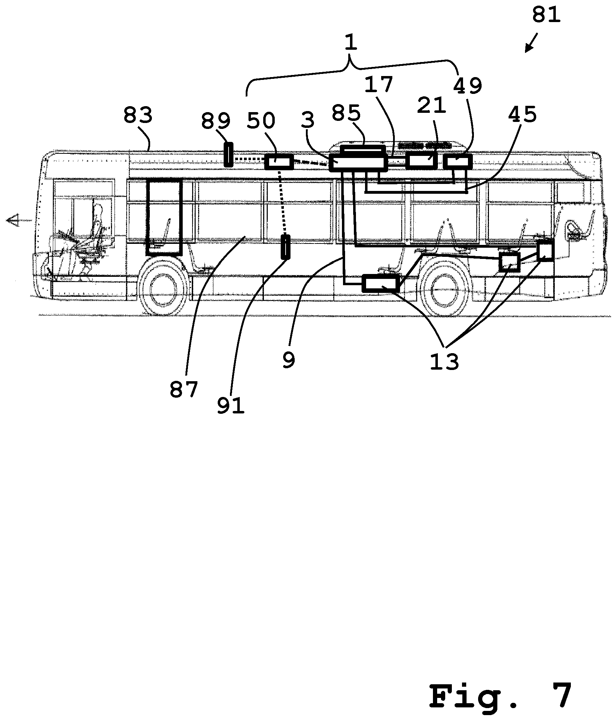

In Figur 7 ist ein Fahrzeug 81 mit einer erfindungsgemäßen Heizungs- und Klimaanlage 1 dargestellt. Die Heizungs- und Klimaanlage 1 entspricht zum Beispiel einer der in Figur 1 oder der in Figur 2 gezeigten Ausführungen. Das Fahrzeug 81 ist ein Omnibus. Der Omnibus hat einen rein elektrischen Antrieb. Denkbar ist beispielsweise auch ein Hybridantrieb.

Der Kältemittelkreis 3 mit seinen zu Figur 1 oder 2 beschriebenen Komponenten befindet sich im Bereich des Fahrzeugdachs 83. Der Außenwärmetauscher befindet sich zum Wärmetausch von Kältemittel mit Außenluft direkt unter der Lüftereinheit 85 auf dem Fahrzeugdach 83.

Der über den ersten Wärmetauscher hochdruckseitig an den Kältemittelkreis 3 thermisch angeschlossene erste Heizkreis 9 führt durch die Konvektoren 13 im Bodenbereich des Fahrgastraums 87, die zum Heizen der Luft im Fahrgastraum 87 dienen. Der erste Heizkreis 9 mit seinen Komponenten wie insbesondere einer Pumpe entspricht dem in den Figuren 1 und 2 beschriebenen. Er ist ein Hochtemperaturkreis.

Der über den dritten Wärmetauscher hochdruckseitig an den Kältemittelkreis 3 thermisch angeschlossene zweiten Heizkreis 17 führt zu dem Luft-Flüssigkeits-Wärmetauscher 21 im Dachbereich des Fahrgastraums 87, der zum Heizen von Luft für den Fahrgastraum 87 dient. Der zweite Heizkreis 17 mit seinen Komponenten wie insbesondere einer Pumpe entspricht dem in den Figuren 1 und 2 beschriebenen. Er ist ein Mitteltemperaturkreis.

Der über den zweiten Wärmetauscher niederdruckseitig an den Kältemittelkreis 3 thermisch angeschlossene Kühlkreis 45 führt zu dem Luft-Flüssigkeits-Wärmetauscher 49 auch im Dachbereich des Fahrgastraums 87, der zum Kühlen von Luft für den Fahrgastraum 87 dient. Der Kühlkreis 45 mit seinen Komponenten wie insbesondere einer Pumpe entspricht dem in den Figuren 1 und 2 beschriebenen. Er ist ein Niedertemperaturkreis.

Mit der Regelung 50 wird die Heizungs- und Klimaanlage 1 gesteuert. Sie empfängt dafür Messsignale vom Außenlufttemperatursensor 89 und dem Fahrzeuginnraumtemperatursensor 91.

Als Fahrzeug 81 mit einer erfindungsgemäßen Heizungs- und Klimaanlage 1 käme auch ein Schienenfahrzeug, wie zum Beispiel eine Straßenbahn in Frage.

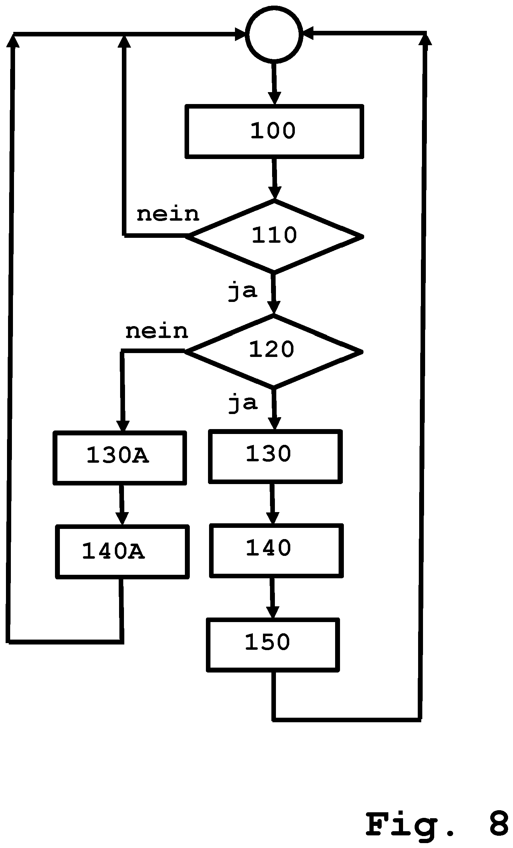

In Figur 8 ist in Flussdiagrammdarstellung ein Ausführungsbeispiel eines Verfahrens zum Steuern einer erfindungsgemäßen Heizungs- und Klimaanlage eines Fahrzeugs wie beispielsweise eines Omnibusses dargestellt. Die Heizungs- und Klimaanlage entspricht der in Figur 1 gezeigten. Das Steuern erfolgt mittels der Regelung. Im ersten Verfahrensschritt 100 empfängt die Regelung die Messdaten von den Temperatursensoren für die Temperatur der Außenluft und für die Temperaturen von Luft im Fahrzeuginnenraum, wie insbesondere dem Fahrgastbereich. Im zweiten Verfahrensschritt 110 entscheidet anhand der gemessenen Temperaturen und der vorgegebenen Solltemperatur die Regelung, ob die Heizungs- und Klimaanlage in Betrieb bleiben beziehungsweise gehen soll. Falls nein wird die Heizungs- und Klimaanlage, sofern noch laufend, gestoppt und das Verfahren startet nach einer Wartezeit von beispielsweise einer Sekunde erneut. Wenn jedoch im Verfahrensschritt 110 das Ergebnis ist, dass die Heizungs- und Klimaanlage eingeschaltet wird beziehungsweise bleibt, wird im nächsten Verfahrensschritt 120 entschieden, ob sie im Wärmepumpenbetrieb zum Heizen oder im Klimabetrieb zum Kühlen laufen soll. Sofern das Ergebnis der Wärmepumpenbetrieb, also "ja", ist, wird dafür im Verfahrensschritt 130 im Kältemittelkreis das als Absperrventil ausgebildete Ventil zwischen drittem Wärmetauscher und Gaskühlerbereich des Außenwärmetauschers geschlossen und das erste Expansionsorgan für die Expansion des Kältemittels vor dem Verdampferbereich des Außenwärmetauschers geöffnet sowie der Verdichter des Kältemittelkreises eingeschaltet beziehungsweise dieser bleibt eingeschaltet. Außerdem wird die Pumpe des Kühlkreises ausgeschaltet oder bleibt ausgeschaltet.

Im nächsten Verfahrensschritt 140 wird die Pumpe des als Hochtemperaturkreis fungierenden ersten Heizkreises eingeschaltet. Aufgeheizt durch den Wärmetausch mit dem unter hohem Druck stehenden über 40 °C heißen Kältemittel im als Enthitzer angeordneten ersten Wärmetauscher strömt so die Heizflüssigkeit mit einem Temperaturniveau von mindestens 40 °C durch den ersten Heizkreis und somit auch durch den Konvektor im Bodenbereich des Fahrzeuginnenraums, was die dortige Luft heizt. Das Kältemittel ist CO2.

Im Verfahrensschritt 150 wird die Pumpe des zweiten Heizkreises eingeschaltet. Dadurch zirkuliert im als Nachkühler im Kältemittelkreis nach dem ersten Wärmetauscher angeordneten dritten Wärmetauscher erwärmte Heizflüssigkeit des zweiten Heizkreises durch die Luft-Flüssigkeits-Wärmetauscher im Dachbereich des Fahrzeuginnenraums. Dort wird Luft für den Fahrzeuginnenraum erwärmt. Die Heizflüssigkeit des zweiten Heizkreises, wie beispielsweise Wasser, hat ein niedrigeres Temperaturniveau als die des ersten Heizkreises. Die Temperatur der Heizflüssigkeit des zweiten Heizkreises liegt dabei zwischen 15 °C und 40 °C. Im dritten Wärmetauscher ist die Temperatur des unter hohem Druck stehenden Kältemittels bereits auf eine Temperatur im Bereich zwischen 15 °C und 40 °C abgesunken, sodass beim Wärmetausch die Heizflüssigkeit des zweiten Heizkreises nicht höher erwärmt wird. Denkbar ist auch, dass die Verfahrensschritte 130, 140 und 150 nicht nacheinander sondern gleichzeitig parallel ablaufen.

Nach einer Wartezeit von beispielsweise einer Sekunde beginnt das Verfahren dann erneut durchzulaufen.

Wenn jedoch im Verfahrensschritt 120 das Ergebnis der Klimabetrieb zum Kühlen ist, also "nein", dann wird im folgenden Verfahrensschritt 130A das erste Expansionsorgan vor dem Verdampferbereich des Außenwärmetauschers geschlossen und das als Absperrventil ausgebildete Ventil zwischen drittem Wärmetauscher und Gaskühlerbereich des Außenwärmetauschers geöffnet sowie der Verdichter des Kältemittelkreises eingeschalten beziehungsweise dieser bleibt eingeschaltet. Außerdem werden die Pumpen des ersten und zweiten Heizkreises ausgeschaltet oder bleibt ausgeschaltet. Im Verfahrensschritt 140A wird die Pumpe des Kühlkreises, der als Niedertemperaturkreis fungiert, eingeschaltet oder bleibt eingeschaltet. Dadurch zirkuliert die Kühlflüssigkeit darin und strömt durch den als Verdampfer eingesetzten zweiten Wärmetauscher, in dem sie mittels Wärmetausch mit dem niederdruckseitig verdampfenden kalten Kältemittel des Kältemittelkreises abgekühlt wird. Die Kühlflüssigkeit ist in diesem Fall ein Glykol-Wasser-Gemisch. Sie strömt nach ihrer Abkühlung weiter durch den im Dachbereich des Fahrzeuginnenraums befindlichen Luft-Flüssigkeits-Wärmetauscher und kühlt dort Luft für den Fahrzeuginnenraum.

Nach einer Wartezeit von zum Beispiel einer Sekunde startet das Verfahren erneut.

Das Verfahren läuft entsprechend auch zum Steuern einer in Figur 2 gezeigten Heizungs- und Klimaanlage ab, wobei jedoch beim Wärmetausch vom Kältemittel zu den Heizflüssigkeiten des ersten und zweiten Heizkreises sowie beim Kältetausch vom Kältemittel zur Kühlflüssigkeit des Kühlkreises der Zwischenschritt der Wärme- oder Kältespeicherung im jeweiligen Latentwärmespeichermedium des ersten, zweiten und dritten Wärmetauschers erfolgt.

## Patentansprüche

1. Heizungs- und Klimaanlage (1) mit einem zumindest eine Pumpe (11) umfassenden ersten Heizkreis (9) zum Heizen und mit einem zumindest eine Pumpe (47) umfassenden Kühlkreis (45) sowie mit einem Kältemittelkreis (3), der einen Verdichter (5), ein Expansionsorgan (29, 41),
einen hochdruckseitigen ersten Wärmetauscher (7) und einen zumindest für den Klimabetrieb zugeschalteten oder zuschaltbaren niederdruckseitigen zweiten Wärmetauscher (43) wenigstens umfasst, wobei der erste Wärmetauscher (7) auch an den ersten Heizkreis (9) angeschlossen ist und der zweite Wärmetauscher (43) auch an den Kühlkreis (45) angeschlossen ist, und im ersten Wärmetauscher (7) Kältemittel des Kältemittelkreises (3) mit Heizflüssigkeit des ersten Heizkreises (9) durch Wärmetauschverbindung direkt und/oder über ein gegebenenfalls erstes Latentwärmespeichermedium (14) thermisch gekoppelt oder koppelbar ist und im zweiten Wärmetauscher (43) Kältemittel des Kältemittelkreises (3) und Kühlflüssigkeit des Kühlkreises (45) durch Wärmetauschverbindung direkt und/oder über ein gegebenenfalls zweites Latentwärmespeichermedium (14a) thermisch gekoppelt oder koppelbar ist, wobei die Heizungs- und Klimaanlage (1) für ein Fahrzeug ausgebildet ist
und die Heizungs- und Klimaanlage (1) einen zumindest eine Pumpe (19) umfassenden zweiten Heizkreis (17) zum Heizen umfasst, und
der Kältemittelkreis (3) einen zum ersten Wärmetauscher (7) in vorgesehener Kältemittelströmungsrichtung stromabwärts angeordneten hochdruckseitigen dritten Wärmetauscher (15) umfasst, und
der dritte Wärmetauscher (15) auch an den zweiten Heizkreis (17) angeschlossen ist, wobei im dritten Wärmetauscher (15) Kältemittel des Kältemittelkreises (3) mit Heizflüssigkeit des zweiten Heizkreises (17) durch Wärmetauschverbindung direkt und/oder über ein gegebenenfalls drittes Latentwärmespeichermedium (14b) thermisch gekoppelt oder koppelbar ist,
**dadurch gekennzeichnet,**
**dass** der Kältemittelkreis (3) einen im Wärmepumpenbetrieb als Verdampfer betreibbaren Außenwärmetauscher (31) umfasst, der in Kältemittelströmungsrichtung stromabwärts des dritten Wärmetauschers (15) angeordnet ist.

2. Heizungs- und Klimaanlage (1) nach Anspruch 1 **dadurch gekennzeichnet, dass** der erste Wärmetauscher (7) im Kältemittelkreis (3) als Enthitzer für ein erstes Temperaturniveau und der dritte Wärmetauscher (15) im Kältemittelkreis (3) als Nachkühler für ein niedriges zweites Temperaturniveau ausgebildet sind.

3. Heizungs- und Klimaanlage (1) nach Anspruch 1 oder 2 **dadurch gekennzeichnet, dass** zumindest der erste Wärmetauscher (7) und
der dritte Wärmetauscher (15) auch als Latentwärmespeicher mit jeweiligem Latentwärmespeichermedium (14, 14b) ausgebildet sind und das erste Latentwärmespeichermedium (14) durch Wärmetauschverbindung einerseits mit Kältemittel des Kältemittelkreises (3) und andererseits mit Heizflüssigkeit des
ersten Heizkreises (9) thermisch gekoppelt oder koppelbar ist und das dritte Latentwärmespeichermedium (14b) durch Wärmetauschverbindung einerseits mit Kältemittel des Kältemittelkreises (3) und andererseits mit Heizflüssigkeit des zweiten Heizkreises (17) thermisch gekoppelt oder koppelbar ist und eine niedrigere Schmelztemperatur als das erste Latentwärmespeichermedium (14) aufweist.

4. Heizungs- und Klimaanlage (1) nach einem der Ansprüche 1 bis 3 **dadurch gekennzeichnet, dass** der erste Wärmetauscher (7) und/oder der zweite Wärmetauscher (43) und/oder der dritte Wärmetauscher (15) als Röhren-Lamellen-Wärmetauscher oder als Plattenwärmetauscher ausgebildet ist/sind.

5. Heizungs- und Klimaanlage (1) nach Anspruch 1 bis 4 **dadurch gekennzeichnet, dass** der Kältemittelkreis (3) derart druckfest ausgebildet ist, dass er mit Kältemittel transkritisch betreibbar ist.

6. Heizungs- und Klimaanlage (1) nach Anspruch 5 **dadurch gekennzeichnet, dass** das Kältemittel des Kältemittelkreises (3) CO2 ist, wobei für das Kältemittel die gesamte Hochdruckseite des Kältemittelkreises (3) eine Druckfestigkeit von mindestens 90 bar aufweist.

7. Heizungs- und Klimaanlage (1) nach einem der Ansprüche 1 bis 6 **dadurch gekennzeichnet, dass** in vorgesehener Kältemittelströmungsrichtung stromabwärts des dritten Wärmetauschers (15) der Außenwärmetauscher (31) angeordnet und derart ausgebildet ist, dass er (31) als Luft-Kältemittel-Wärmetauscher für den Wärmepumpenbetrieb als Verdampfer und für den Klimabetrieb als Gaskühler betreibbar ist.

8. Heizungs- und Klimaanlage (1) nach Anspruch 7 **dadurch gekennzeichnet, dass** der Außenwärmetauscher (31) zwei getrennte Kältemittelleitungen (33, 37) zweier Kältemittelleitungsstränge (25a, 25b) aufweist, wobei in dem einen Kältemittelleitungsstrang (25a) das Expansionsorgan (29) in vorgesehener Kältemittelströmungsrichtung stromaufwärts des Außenwärmetauschers (31) und im anderen Kältemittelleitungsstrang (25b) ein zweites Expansionsorgan (41) in vorgesehener Kältemittelströmungsrichtung stromabwärts des Außenwärmetauschers (31) sowie weiter stromabwärts der zweite Wärmetauscher (43) angeordnet sind und die beiden Kältemittelleitungsstränge (25a, 25b) mit Hilfe wenigstens eines in vorgesehener Kältemittelströmungsrichtung stromabwärts des dritten Wärmetauschers (15) angeordneten -Ventils (35) in Parallelschaltung zueinander zumindest alternativ schaltbar sind.

9. Heizungs- und Klimaanlage (1) nach Anspruch 8 **dadurch gekennzeichnet, dass** der Außenwärmetauscher (31) im Kältemittelkreis (3) als Mischwärmetauscher gleichzeitig sowohl als Verdampfer als auch als Gaskühler betreibbar ist und das Größenverhältnis der Kältemittelströme durch die beiden Kältemittelleitungsstränge (25a, 25b) regelbar ist.

10. Heizungs- und Klimaanlage (1) nach einem der Ansprüche 1 bis 9 **dadurch gekennzeichnet, dass** der erste Heizkreis (9) auch mindestens einen Konvektor (13) zum Positionieren im Bodenbereich eines Fahrzeuginnenraums (87) und/oder auch mindestens einen Luft-Flüssigkeits-Wärmetauscher (61) für das Heizen von Luft für den Fahrerplatzbereich umfasst und
der zweite Heizkreis (17) auch mindestens einen Luft-Flüssigkeits-Wärmetauscher (21) zum Positionieren im Bereich eines Fahrzeugdachs (83) für das Heizen von Luft für einen Fahrzeuginnenraum (87) oder für einen Fahrzeuginnenraumbereich umfasst.

11. Heizungs- und Klimaanlage (1) nach einem der Ansprüche 1 bis 10 **dadurch gekennzeichnet, dass** der Kühlkreis (45) auch wenigstens einen Luft-Flüssigkeits-Wärmetauscher (49) für das Kühlen von Luft für einen Fahrzeuginnenraum (87) oder für einen Fahrzeuginnenraumbereich umfasst.

12. Heizungs- und Klimaanlage (1) nach einem der Ansprüche 1 bis 11 **dadurch gekennzeichnet, dass** sie eine Regelung (50) für das Steuern der Heizungs- und Klimaanlage (1) umfasst.

13. Heizungs- und Klimaanlage (1) nach Anspruch 12 **dadurch gekennzeichnet, dass** die Regelung (50) ausgebildet ist, das Schalten des Kältemittelkreises (3) zwischen Klimabetrieb und Wärmepumpenbetrieb zu steuern und
die Pumpen (11, 19) des ersten (9) und zweiten Heizkreises (17) sowie die Pumpe (47) des Kühlkreises (45) in der Pumpleistung zu steuern
und/oder
mit Hilfe von Messdaten von Temperatursensoren die jeweilige Temperatur der jeweiligen Heiz- und Kühlflüssigkeit zu steuern
und/oder
die Leistung des Verdichters (5) zu steuern und/oder
das/die Expansionsorgan/e (29, 41) zu steuern.

14. Heizungs- und Klimaanlage (1) nach einem der Ansprüche 1 bis 13 **dadurch gekennzeichnet, dass** der erste (7) und dritte Wärmetauscher (15) als Teile einer Wärmetauschereinheit ausgebildet sind.

15. Fahrzeug (81), wie insbesondere ein Omnibus oder Schienenfahrzeug, mit einer Heizungs- und Klimaanlage (1) nach einem der Ansprüche 1 bis 14.

16. Fahrzeug (81) nach Anspruch 15 **dadurch gekennzeichnet, dass** es ein Elektrofahrzeug oder ein Hybridfahrzeug ist.

17. Verfahren zum Steuern einer Heizungs- und Klimaanlage (1) nach einem der Ansprüche 1 bis 14 bei einem Fahrzeug (81) nach einem der Ansprüche 15 bis 16 für das Heizen und/oder Kühlen von Luft für einen oder mehrere Fahrzeuginnenräume (87) oder Fahrzeuginnenraumbereiche, wobei gleichzeitig zum Heizen der erste Heizkreis (9) mit einem höheren Temperaturniveau als der zweite Heizkreis (17) betrieben werden.

## Claims

1. Heating and air-conditioning system (1) comprising a first heating circuit (9), having at least one pump (11), for heating and comprising a cooling circuit (45) having at least one pump (47), and comprising a refrigerant circuit (3), which at least comprises a compressor (5), an expansion member (29, 41), a high-pressure-side first heat exchanger (7) and a low-pressure-side second heat exchanger (43) which is or can be activated at least for air-conditioning operation, wherein the first heat exchanger (7) is also connected to the first heating circuit (9) and the second heat exchanger (43) is also connected to the cooling circuit (45), and, in the first heat exchanger (7), refrigerant of the refrigerant circuit (3) is or can be thermally coupled to heating liquid of the first heating circuit (9) by a heat exchange connection directly and/or via an optionally first latent heat storage medium (14) and, in the second heat exchanger (43), refrigerant of the refrigerant circuit (3) and cooling liquid of the cooling circuit (45) is or can be thermally coupled by a heat exchange connection directly and/or via an optionally second latent heat storage medium (14a), wherein the heating and air-conditioning system (1) is designed for a vehicle
and the heating and air-conditioning system (1) comprises a second heating circuit (17), having at least one pump (19), for heating, and
the refrigerant circuit (3) comprises a high-pressure-side third heat exchanger (15) arranged downstream of the first heat exchanger (7) in the intended refrigerant flow direction, and
the third heat exchanger (15) is also connected to the second heating circuit (17), wherein, in the third heat exchanger (15), refrigerant of the refrigerant circuit (3) is or can be thermally coupled to heating liquid of the second heating circuit (17) by a heat exchange connection directly and/or via an optionally third latent heat storage medium (14b), **characterised in that**
the refrigerant circuit (3) comprises an external heat exchanger (31) that can be operated as an evaporator in heat pump operation and is arranged downstream of the third heat exchanger (15) in the refrigerant flow direction.

2. Heating and air-conditioning system (1) according to claim 1, **characterised in that** the first heat exchanger (7) in the refrigerant circuit (3) is designed as a desuperheater for a first temperature level and the third heat exchanger (15) in the refrigerant circuit (3) is designed as an aftercooler for a low second temperature level.

3. Heating and air-conditioning system (1) according to claim 1 or 2, **characterised in that** at least the first heat exchanger (7) and the third heat exchanger (15) are also designed as latent heat stores each comprising a latent heat storage medium (14, 14b) and the first latent heat storage medium (14) is or can be thermally coupled by a heat exchange connection both to refrigerant in the refrigerant circuit (3) and to heating liquid of the first heating circuit (9), and the third latent heat storage medium (14b) is or can be thermally coupled by a heat exchange connection both to refrigerant of the refrigerant circuit (3) and to heating liquid of the second heating circuit (17) and has a lower melting point than the first latent heat storage medium (14).

4. Heating and air-conditioning system (1) according to any of claims 1 to 3, **characterised in that** the first heat exchanger (7) and/or the second heat exchanger (43) and/or the third heat exchanger (15) is/are designed as finned tube heat exchangers or plate heat exchangers.

5. Heating and air-conditioning system (1) according to claims 1 to 4, **characterised in that** the refrigerant circuit (3) is designed to be pressure-resistant such that it can be operated with refrigerant in a transcritical manner.

6. Heating and air-conditioning system (1) according to claim 5, **characterised in that** the refrigerant of the refrigerant circuit (3) is CO₂, the entire high-pressure side of the refrigerant circuit (3) having a pressure resistance of at least 90 bar for the refrigerant.

7. Heating and air-conditioning system (1) according to any of claims 1 to 6, **characterised in that** the external heat exchanger (31) is arranged and formed in the intended refrigerant flow direction downstream of the third heat exchanger (15) such that it (31), in the form of an air-refrigerant heat exchanger, can be operated as an evaporator for heat pump operation and as a gas cooler for air-conditioning operation.

8. Heating and air-conditioning system (1) according to claim 7, **characterised in that** the external heat exchanger (31) comprises two separate refrigerant lines (33, 37) of two refrigerant line branches (25a, 25b), the expansion member (29) being arranged in one refrigerant line branch (25a) in the intended refrigerant flow direction upstream of the external heat exchanger (31) and a second expansion member (41) being arranged in the other refrigerant line branch (25b) in the intended refrigerant flow direction downstream of the external heat exchanger (31) and further downstream of the second heat exchanger (43), and the two refrigerant line branches (25a, 25b) being able to be connected in parallel with one another, at least as an alternative, by means of at least one valve (35) arranged in the intended refrigerant flow direction downstream of the third heat exchanger (15).

9. Heating and air-conditioning system (1) according to claim 8, **characterised in that** the external heat exchanger (31) in the refrigerant circuit (3) in the form of a mixed heat exchanger can be operated simultaneously both as an evaporator and as a gas cooler and the size ratio of the refrigerant flows can be regulated by the two refrigerant line branches (25a, 25b).

10. Heating and air-conditioning system (1) according to any of claims 1 to 9, **characterised in that** the first heating circuit (9) also comprises at least one convector (13) for positioning in the floor region of a vehicle interior (87) and/or also comprises at least one air-liquid heat exchanger (61) for heating air for the driver's compartment region and the second heating circuit (17) also comprises at least one air-liquid heat exchanger (21) for positioning in the region of a vehicle roof (83) for heating air for a vehicle interior (87) or for a vehicle interior region.

11. Heating and air-conditioning system (1) according to any of claims 1 to 10, **characterised in that** the cooling circuit (45) also comprises at least one air-liquid heat exchanger (49) for cooling air for a vehicle interior (87) or for a vehicle interior region.

12. Heating and air-conditioning system (1) according to any of claims 1 to 11, **characterised in that** it comprises a regulator (50) for controlling the heating and air-conditioning system (1).

13. Heating and air-conditioning system (1) according to claim 12, **characterised in that** the regulator (50) is designed to control the switching of the refrigerant circuit (3) between air-conditioning operation and heat pump operation and
to control the pumps (11, 19) of the first heating circuit (9) and the second heating circuit (17) as well as the pump (47) of the cooling circuit (45) in terms of the pumping power
and/or
to control the relevant temperature of the relevant heating and cooling liquid by means of measured data from temperature sensors
and/or
to control the power of the compressor (5)
and/or
to control the expansion member(s) (29, 41).

14. Heating and air-conditioning system (1) according to any of claims 1 to 13, **characterised in that** the first heat exchanger (7) and the third heat exchanger (15) are designed as parts of a heat exchanger unit.

15. Vehicle (81), such as a bus or a rail vehicle in particular, comprising a heating and air-conditioning system (1) according to any of claims 1 to 14.

16. Vehicle (81) according to claim 15, **characterised in that** it is an electric vehicle or a hybrid vehicle.

17. Method for controlling a heating and air-conditioning system (1) according to any of claims 1 to 14 in a vehicle (81) according to any of claims 15 to 16 for heating and/or cooling air for one or more vehicle interiors (87) or vehicle interior regions, wherein, at the same time, for the heating the first heating circuit (9) is operated at a higher temperature level than the second heating circuit (17) .

## Revendications

1. Installation de chauffage et de climatisation (1) avec un premier circuit de chauffage (9) pour le chauffage comprenant au moins une pompe (11) et avec un circuit de refroidissement (45) comprenant au moins une pompe (47) ainsi qu'avec un circuit de fluide frigorigène (3), qui comprend un compresseur (5), un organe d'expansion (29, 41), un premier échangeur de chaleur (7) côté haute pression et un deuxième échangeur de chaleur (43) côté basse pression activé ou pouvant être activé au moins pour le mode de climatisation, dans laquelle le premier échangeur de chaleur (7) est également raccordé au premier circuit de chauffage (9) et le deuxième échangeur de chaleur (43) est également raccordé au circuit de refroidissement (45), et du fluide frigorigène du circuit de fluide frigorigène (3) est couplé ou peut être couplé thermiquement directement et/ou par l'intermédiaire d'un éventuellement premier milieu d'accumulation de chaleur latente (14) par liaison d'échange de chaleur à du liquide de chauffage du premier circuit de chauffage (9) dans le premier échangeur de chaleur (7) et du fluide frigorigène du circuit de fluide frigorigène (3) et du liquide de refroidissement du circuit de refroidissement (45) sont couplés ou peuvent être couplés thermiquement directement et/ou par l'intermédiaire d'un éventuellement deuxième milieu d'accumulation de chaleur latente (14a) par liaison d'échange de chaleur dans le deuxième échangeur de chaleur (43), dans laquelle l'installation de chauffage et de climatisation (1) est réalisée pour un véhicule,
et l'installation de chauffage et de climatisation (1) présente un deuxième circuit de chauffage (17) pour le chauffage comprenant au moins une pompe (19), et
le circuit de fluide frigorigène (3) comprend un troisième échangeur de chaleur (15) côté haute pression disposé en aval du premier échangeur de chaleur (7) dans une direction d'écoulement de fluide frigorigène prévue, et
le troisième échangeur de chaleur (15) est également raccordé au deuxième circuit de chauffage (17), dans laquelle du fluide frigorigène du circuit de fluide frigorigène (3) est couplé ou peut être couplé thermiquement directement et/ou par l'intermédiaire d'un éventuellement troisième milieu d'accumulation de chaleur latente (14b) par liaison d'échange de chaleur au liquide de chauffage du deuxième circuit de chauffage (17) dans le troisième échangeur de chaleur (15),
**caractérisée en ce**
**que** le circuit de fluide frigorigène (3) comprend un échangeur de chaleur extérieur (31) pouvant fonctionner en tant qu'évaporateur dans le mode de pompe à chaleur, qui est disposé dans la direction d'écoulement de fluide frigorigène en aval du troisième échangeur de chaleur (15).

2. Installation de chauffage et de climatisation (1) selon la revendication 1, **caractérisée en ce que** le premier échangeur de chaleur (7) dans le circuit de fluide frigorigène (3) est réalisé en tant que désurchauffeur pour un premier niveau de température et le troisième échangeur de chaleur (15) dans le circuit de fluide frigorigène (3) est réalisé en tant qu'unité de refroidissement ultérieur pour un deuxième niveau bas de température.

3. Installation de chauffage et de climatisation (1) selon la revendication 1 ou 2, **caractérisée en ce qu'**au moins le premier échangeur de chaleur (7) et le troisième échangeur de chaleur (15) sont réalisés également en tant qu'accumulateur de chaleur latente avec un milieu d'accumulation de chaleur latente (14, 14b) respectif et le premier milieu d'accumulation de chaleur latente (14) est couplé ou peut être couplé thermiquement d'une part à du fluide frigorigène du circuit de fluide frigorigène (3) et d'autre part à du liquide de chauffage du premier circuit de chauffage (9) par liaison d'échange de chaleur et le troisième milieu d'accumulation de chaleur latente (14b) est couplé ou peut être couplé thermiquement d'une part à du fluide frigorigène du circuit de fluide frigorigène (3) et d'autre part à du liquide de chauffage du deuxième circuit de chauffage (17) par liaison d'échange de chaleur et présente une température de fusion plus basse que le premier milieu d'accumulation de chaleur latente (14).

4. Installation de chauffage et de climatisation (1) selon l'une quelconque des revendications 1 à 3, **caractérisée en ce que** le premier échangeur de chaleur (7) et/ou le deuxième échangeur de chaleur (43) et/ou le troisième échangeur de chaleur (15) est réalisé/sont réalisés en tant qu'échangeur à tubes et à lamelles ou en tant qu'échangeur de chaleur à plaques.

5. Installation de chauffage et de climatisation (1) selon la revendication 1 à 4, **caractérisée en ce que** le circuit de fluide frigorigène (3) est réalisé de manière résistante à la pression de telle manière qu'il peut fonctionner en cycle transcritique avec du fluide frigorigène.

6. Installation de chauffage et de climatisation (1) selon la revendication 5, **caractérisée en ce que** le fluide frigorigène du circuit de fluide frigorigène (3) est du CO₂, dans laquelle la totalité du côté haute pression du circuit de fluide frigorigène (3) présente, pour le fluide frigorigène, une résistance à la pression d'au moins 90 bar.

7. Installation de chauffage et de climatisation (1) selon l'une quelconque des revendications 1 à 6, **caractérisée en ce que** l'échangeur de chaleur extérieur (31) est disposé dans une direction d'écoulement de fluide frigorigène prévue en aval du troisième échangeur de chaleur (15) et est réalisé de telle manière qu'en tant qu'échangeur de chaleur à air-fluide frigorigène, il (31) peut fonctionner en tant qu'évaporateur pour le mode de pompe à chaleur et en tant que refroidisseur de gaz pour le mode de de climatisation.

8. Installation de chauffage et de climatisation (1) selon la revendication 7, **caractérisée en ce que** l'échangeur de chaleur extérieur (31) présente deux conduits de fluide frigorigène (33, 37) séparés de deux faisceaux de conduits de fluide frigorigène (25a, 25b), dans laquelle l'organe d'expansion (29) est disposé dans une direction d'écoulement de fluide frigorigène prévue en amont de l'échangeur de chaleur extérieur (31) dans un faisceau de conduits de fluide frigorigène (25a) et un deuxième organe d'expansion (41) est disposé dans une direction d'écoulement de fluide frigorigène prévue en aval de l'échangeur de chaleur extérieur (31) dans l'autre faisceau de conduits de fluide frigorigène (25b) et par ailleurs en aval du deuxième échangeur de chaleur (43), et les deux faisceaux de conduits de fluide frigorigène (25a, 25b) peuvent être branchés au moins en variante en parallèle l'un par rapport à l'autre à l'aide d'au moins une soupape (35) disposée en aval du troisième échangeur de chaleur (15) dans une direction d'écoulement de fluide frigorigène prévue.

9. Installation de chauffage et de climatisation (1) selon la revendication 8, **caractérisée en ce que** l'échangeur de chaleur extérieur (31) dans le circuit de fluide frigorigène (3) peut fonctionner en tant qu'échangeur de chaleur mélangeur et simultanément également en tant qu'évaporateur ou en tant que refroidisseur de gaz et le rapport de proportions des flux de fluide frigorigène peut être régulé par les deux faisceaux de conduits de fluide frigorigène (25a, 25b).

10. Installation de chauffage et de climatisation (1) selon l'une quelconque des revendications 1 à 9, **caractérisée en ce que** le premier circuit de chauffage (9) comprend également au moins un convecteur (13) destiné à être positionné dans la zone de plancher d'un habitacle de véhicule (87) et/ou également au moins un échangeur de chaleur à air-liquide (61) pour le chauffage de l'air pour l'espace de place de conducteur et le deuxième circuit de chauffage (17) comprend également au moins un échangeur de chaleur à air-liquide (21) destiné à être positionné dans la zone d'un toit de véhicule (83) pour le chauffage de l'air pour un habitacle de véhicule (87) ou pour une zone d'habitacle de véhicule.

11. Installation de chauffage et de climatisation (1) selon l'une quelconque des revendications 1 à 10, **caractérisée en ce que** le circuit de refroidissement (45) comprend également au moins un échangeur de chaleur à air-à liquide (49) pour le refroidissement de l'air pour un habitacle de véhicule (87) ou pour une zone d'habitacle de véhicule.

12. Installation de chauffage et de climatisation (1) selon l'une quelconque des revendications 1 à 11, **caractérisée en ce qu'**elle comprend une régulation (50) pour la commande de l'installation de chauffage et de climatisation (1).

13. Installation de chauffage et de climatisation (1) selon la revendication 12, **caractérisée en ce que** la régulation (50) est réalisée pour commander la commutation du circuit de fluide frigorigène (3) entre le mode de climatisation et le mode de pompe à chaleur,
et
pour commander la puissance de pompage des pompes (11, 19) du premier (9) et du deuxième circuit de chauffage (17) ainsi que de la pompe (47) du circuit de refroidissement (45),
et/ou
pour commander, à l'aide de données de mesure de capteurs de température, la température respective du liquide de chauffage et de refroidissement respectif
et/ou
pour commander la puissance du compresseur (5)
et/ou
pour commander l'organe/les organes d'expansion (29, 41).

14. Installation de chauffage et de climatisation (1) selon l'une quelconque des revendications 1 à 13, **caractérisée en ce que** le premier (7) et le troisième échangeur de chaleur (15) sont réalisés en tant que parties d'une unité d'échange de chaleur.

15. Véhicule (81), en particulier bus ou véhicule sur rails, avec une installation de chauffage et de climatisation (1) selon l'une quelconque des revendications 1 à 14.

16. Véhicule (81) selon la revendication 15, **caractérisé en ce qu'**il est un véhicule électrique ou un véhicule hybride.

17. Procédé de commande d'une installation de chauffage et de climatisation (1) selon l'une quelconque des revendications 1 à 14 pour un véhicule (81) selon l'une quelconque des revendications 15 à 16 pour le chauffage et/ou le refroidissement de l'air pour un ou plusieurs habitacles de véhicule (87) ou zones d'habitacle de véhicule, dans lequel le premier circuit de chauffage (9) tout comme le deuxième circuit de chauffage (17) fonctionnent à un niveau élevé de température simultanément pour le chauffage.
